# EUROPEAN PATENT APPLICATION

(11) **EP 4 357 639 A1**
(43) Date of publication of application: **24.04.2024**
(21) Application number: 23199834.5
(22) Date of filing: 26.09.2023
(51) Int. Cl.: F16F 9/348

(54) **DAMPER ASSEMBLY INCLUDING INTAKE VALVE IN FLUID CHAMBER**

(30) Priority: 29.09.2022 US 202217936700; 22.09.2023 US 202318371526
(71) Applicant: DRiV Automotive Inc., Northville, MI 48168 (US)
(72) Inventor: Deferme, Stefan, Northville, 48168 (US); Diels, Bert Louis Jozef, Northville, 48168 (US); Mangelschots, Gert, Northville, 48168 (US)
(74) Representative: AWA Sweden AB

(57) **Abstract**

A damper (16) comprises an inner tube (28) having a longitudinal axis with a piston (30) slidably disposed in the inner tube. An outer tube surrounds the inner tube and defines a fluid chamber (38) therebetween. A first valve assembly includes a first valve ring (44a) and a first valve disc (48a) fixed to the first valve ring. The first valve disc covers a first passageway to restrict flow therethrough in a first direction and allow flow in an opposite second direction. A second valve assembly includes a second valve ring (44b) and a second valve disc (48b) fixed to the second valve ring. The second valve disc covers a second passageway through the second valve ring to restrict flow therethrough in the second direction and allow flow in the first direction. The first valve assembly is axially spaced apart from the second valve assembly.

## Description

### FIELD

The present disclosure generally relates to dampers. More particularly, the present disclosure relates to a damper with external active control valves and a passive intake valve that selectively allows flow between a rebound working chamber and a compression working chamber.

### BACKGROUND

Dampers for vehicles are commonly included in a wide variety of vehicle segments. Some vehicles include semi-active damping that adjusts damping levels according to road conditions and vehicle dynamics. The dampers are between a body and the suspension system of the vehicle. A piston is located within the damper. The piston is connected to the vehicle body or the suspension of the vehicle through a piston rod. As the damper is compressed or extended, fluid flows between rebound and compression working chambers within the damper to counteract vibrations. By adjusting the flow of damping fluid between the chambers, greater or lower damping forces may be generated.

### SUMMARY

A damper comprises an inner tube having a longitudinal axis with a piston slidably disposed within the inner tube. An outer tube surrounds the inner tube and defines a fluid chamber therebetween. A first valve assembly includes a first valve ring and a first valve disc fixed to the first valve ring. The first valve disc covers a first passageway to restrict flow therethrough in a first direction and allow flow in an opposite second direction. A second valve assembly includes a second valve ring and a second valve disc fixed to the second valve ring. The second valve disc covers a second passageway through the second valve ring to restrict flow therethrough in the second direction and allow flow in the first direction. The first valve assembly is axially spaced apart from the second valve assembly.

In another arrangement, a damper comprises a piston slidably disposed in an inner tube. An outer tube surrounds the inner tube and defines a fluid chamber therebetween. A first valve assembly includes a first valve ring and a first valve disc fixed to the first valve ring. The first valve assembly is positioned within the fluid chamber. A second valve assembly includes a second valve ring and a second valve disc fixed to the second valve ring. The second valve assembly is positioned within the fluid chamber and axially spaced apart from the first valve assembly. The outer tube includes an intake orifice positioned axially between the first valve assembly and the second valve assembly.

A method of assembling a damper comprises coupling a first valve disc to a first valve ring to define a first valve assembly. A second valve disc is coupled to a second valve ring to define a second valve assembly. The method includes sliding the second valve assembly and the first valve assembly onto the inner tube of the damper assembly after the coupling steps. The inner tube, the first valve assembly, and the second valve assembly are positioned within an outer tube of the damper assembly.

### BRIEF DESCRIPTION OF THE DRAWINGS

Figure 1 is a schematic illustration of a vehicle including a suspension system having a plurality of damper assemblies.
Figure 2 is a cross-sectional view of a damper assembly in a rebound stroke.
Figure 3 is a cross-sectional view of the damper assembly in a compression stroke.
Figure 4 is an exploded view of components of the damper assembly including an intake valve.
Figure 5 is a cross-sectional view of components of the damper assembly including the intake valve.
Figure 6 is an illustration of flow chart with step to assembly the intake assembly.
Figure 7 is a cross-sectional of components of the intake assembly before assembly.
Figure 8 is a cross-sectional the intake assembly after assembly.
Figure 9 is a perspective view of the assembly installed on an inner tube of the damper.
Figure 10 is a perspective view of an alternate intake valve installed on an inner tube of the damper.
Figure 11 is an exploded perspective view of the intake valve and inner tube.
Figure 12 is a fragmentary cross sectional view of the intake valve and inner tube taken along line 12-12 as shown in Figure 10.
Figure 13 is another fragmentary cross sectional view of the intake valve and inner tube taken along line 13-13 as depicted in Figure 10.
Figure 14 is a flow chart depicting an assembly method for a damper.

### DETAILED DESCRIPTION

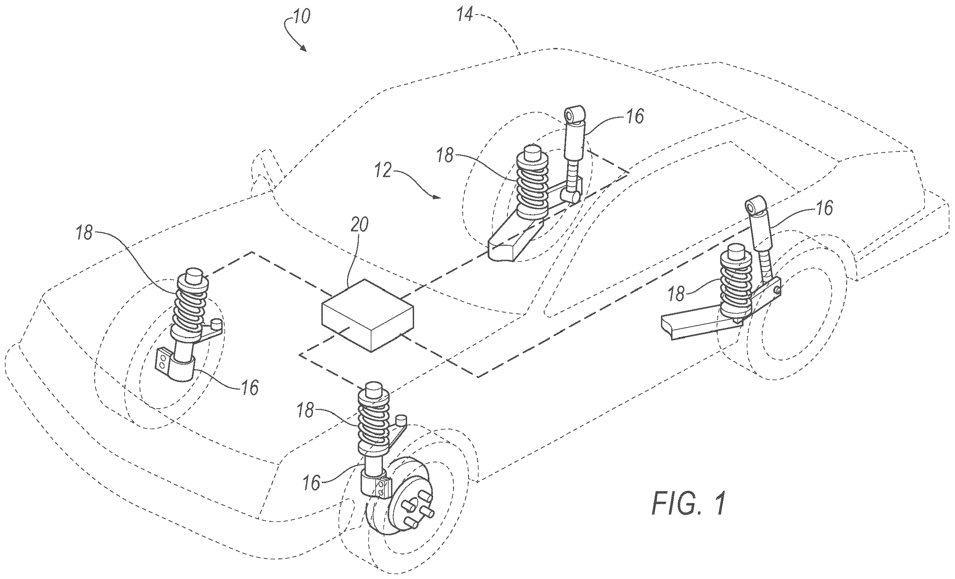

The present disclosure relates to a damping system that may continuously adjust damping levels according to road conditions and vehicle 10 dynamics. With reference to Figure 1 there is shown a vehicle 10 having a suspension system 12 and a body 14. The suspension system 12 includes dampers 16 and coil springs 18. The dampers 16 may be semi-active with damping levels controlled by an Electronic Control Unit (ECU 20). ECU 20 receives information (acceleration, displacement, steering, breaking, speed) from sensors (not shown) at various locations on the vehicle 10 to make independent adjustments to each damper 16.

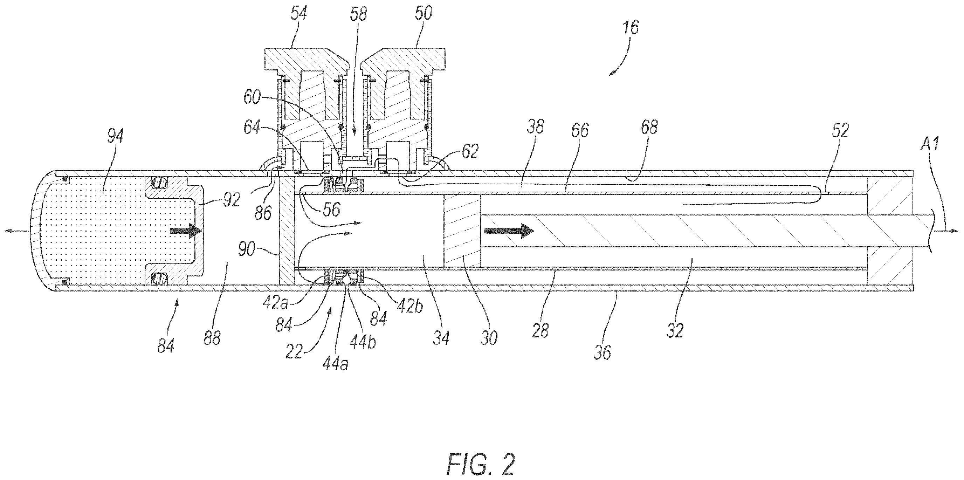

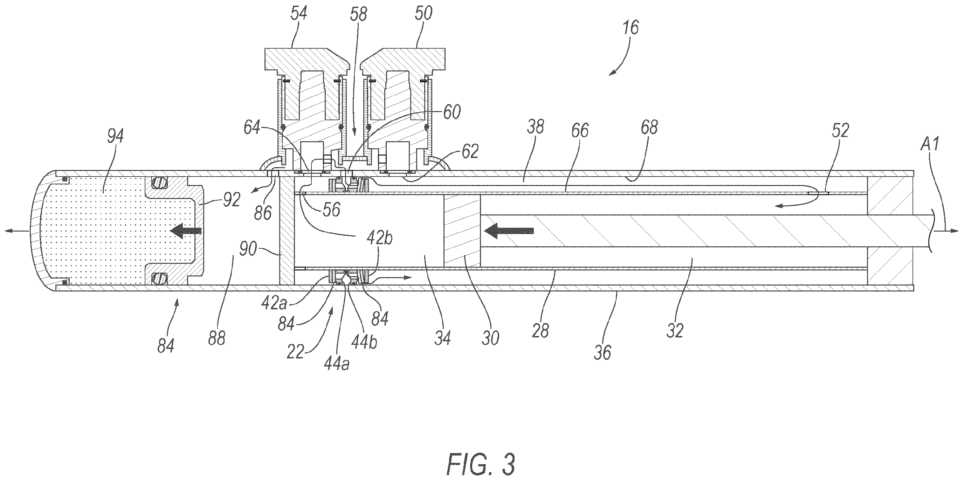

With reference to Figures 2 and 3 the exemplary disclosure provides a damper 16 that includes an intake assembly 22 with at least one unitary support ring 24a, 24b and pair of fulcrum spacers 26a, 26b. Unitary means a single, uniform piece of material with no seams, joints, fasteners, or adhesives holding it together, i.e., formed together simultaneously as a single continuous unit, e.g., by machining from a unitary blank, molding, forging, casting, etc. The unitary support ring 24a, 24b and pair of fulcrum spacers 26a, 26b enable increased assembly efficiencies, e.g., relative to conventional structures and methods.

The dampers 16 include an inner tube 28 elongated along an axis A1, and a piston 30 slidably disposed in the inner tube 28. The piston 30 and the inner tube 28 define a rebound working chamber 32 and compression working chamber 34. The damper 16 includes an outer tube 36 surrounding the inner tube 28. The inner tube 28 and the outer tube 36 define a fluid chamber 38 therebetween. The rebound working chamber 32, the compression working chamber 34, and the fluid chamber 38 contain a fluid, preferably a hydraulic oil suitable for use with dampers 16.

The intake assembly 22 is in the fluid chamber 38 for controlling fluid flow therein. The intake assembly 22 includes the unitary support ring 24a, 24b and pair of fulcrum spacers 26a, 26b. The intake assembly 22 includes one or more support posts 42 fixed to and extending along the axis A1 away from the unitary support ring 24a, 24b and pair of fulcrum spacers 26a, 26b. The intake assembly 22 includes at least one valve ring 44a, 44b supported by the support post 42. The valve ring 44a, 44b defines an orifice 46a, 46b. The intake assembly 22 includes one or more valve discs 48a, 48b, e.g., one or more bendable first valve discs 48a and one or more bendable second valve discs 48b, supported by the support post 42 between the valve ring 44a, 44b and the unitary support ring 24a, 24b and pair of fulcrum spacers 26a, 26b. The valve disc 48a, 48b covers the orifice 46a, 46b of the valve ring 44a, 44b and may control fluid flow therethrough.

The damper 16 includes an active rebound valve 50 in fluid communication with the rebound working chamber 32 through the fluid chamber 38 and a distal orifice 52 of the inner tube 28. The active rebound valve 50 has a variable flow resistance controllable by the ECU 20. The damper 16 also includes an active compression valve 54 that is in fluid communication with compression working chamber 34 through a proximate inner tube orifice 56. The active compression valve 54 has a variable flow resistance controllable by the ECU 20. The active rebound valve 50 and active compression valve 54 are positioned external to the outer tube 36 as shown and may be separated by a gap 58. The active rebound valve 50 and active compression valve 54 may be circumferentially spaced from each other about the outer tube 36 (not shown). The intake assembly 22 is provided within the fluid chamber 38 and may be positioned at the gap 58. The intake assembly 22 is in selective fluid communication with active rebound valve 50 and active compression valve 54 through an outer tube intake orifice 60 whereby the intake assembly 22 controls flow during a rebound and compression stroke.

The active rebound valve 50 is in fluid communication with the fluid chamber 38 through an active rebound valve orifice 62 in the outer tube 36, and with the rebound working chamber 32 through the distal orifice 52 of the inner tube 28. The distal orifice 52 fluidly communicates with the rebound working chamber 32. During a rebound stroke fluid flows from the rebound working chamber 32, out the distal inner tube orifice 56 through the fluid chamber 38, through the active rebound valve orifice 62 in the outer tube 36 into the active rebound valve 50 and through the intake assembly 22 into the compression working chamber 34 through the proximate inner tube orifice 56 into the compression working chamber 34. The active compression valve 54 is in fluid communication with the fluid chamber 38 through an outer tube active compression valve orifice 64 and the proximate inner tube orifice 56. During a compression stroke, fluid flows from the compression working chamber 34, out the proximate inner tube orifice 56, through the active compression valve orifice 64 in the outer tube 36, into the active compression valve 54, through the intake assembly 22, through the fluid chamber 38 and into the rebound working chamber 32 through the distal inner tube orifice 56.

The intake assembly 22 is supported in the fluid chamber 38 between the inner tube 28 and the outer tube 36 of the damper 16. For example, one or more components of the intake assembly 22 may be compressed between the inner tube 28 and the outer tube 36, such as to an outer surface 66 of the inner tube 28 and/or to an inner surface 68 of the inner tube 28. As other example, the one or more components of the intake assembly 22 may be fixed to the inner tube 28 and/or the outer tube 36, e.g., via weld, adhesive, fastener, etc.

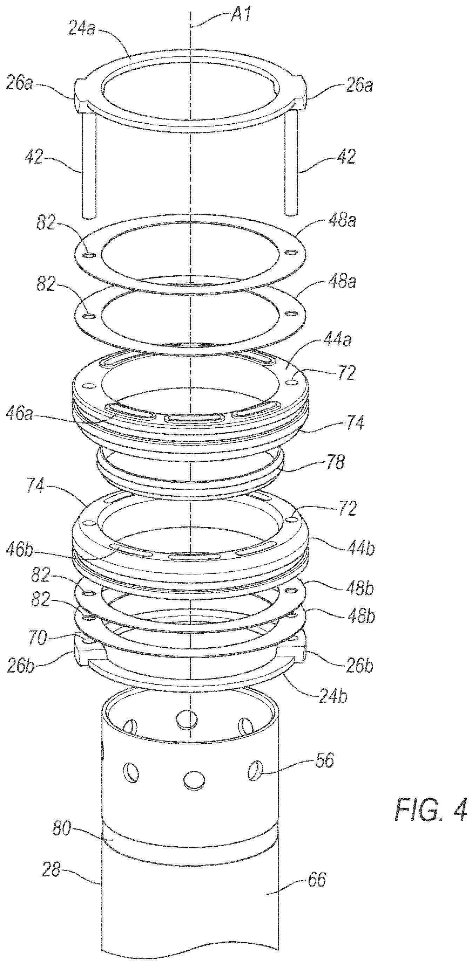

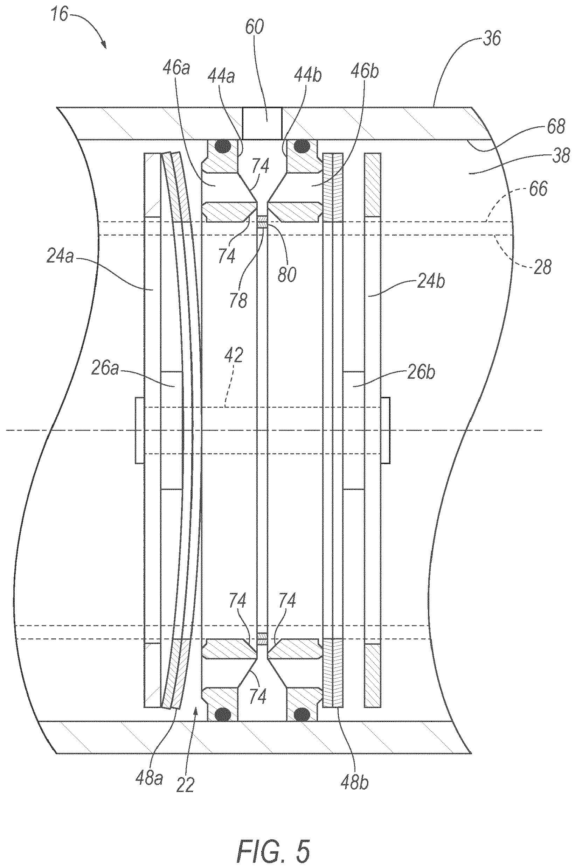

With reference to Figures 4 and 5 the intake assembly 22 is shown in greater detail. The intake assembly 22 may include a first support ring 24a and a second support ring 24b. The first support ring 24a may be at one end of the intake assembly 22 and the second support ring 24b may be at an opposite end of the intake assembly 22. Other components of the intake assembly 22, e.g., the valve rings 44a, 44b and the valve discs 48a, 48b, may be disposed between the first and second support rings 24a, 24b.

The intake assembly 22 includes the fulcrum spacers 26a, 26b to enable bending of the respective valve discs 48a, 48b and provide spacing between the respective valve discs 48a, 48b and support rings 24a, 24b. The supports rings 24a, 24b and the respective fulcrum spacers 26a, 26b are unitary. For example, a first support ring 24a and pair of first fulcrum spacers 26a may be unitary with each other, and a second support ring 24b and pair of second fulcrum spacers 26b may be unitary with each other. The fulcrum spacers 26a, 26b are thicker than the support rings 24a, 24b, e.g., along the axis A1. The increased thickness of the fulcrum spacers 26a, 26b spacing between the respective valve discs 48a, 48b and support rings 24a, 24b and enables bending of the valve discs 48a, 48b toward the support rings 24a, 24b. The fulcrum spacers 26a, 26b may include two (and only two) fulcrum spacers 26a, 26b attached to each support ring 24a, 24b. The two fulcrum spacers 26a, 26b attached to the respective support ring 24a, 24b may be spaced from each other 180-degrees about the support ring 24a, 24b. In other words, the fulcrum spacers 26a, 26b may be opposite each other on the respective support ring 24a, 24b, e.g., having a diameter of the support ring 24a, 24b intersect the fulcrum spacers 26a, 26b. The intake assembly 22 may include more or less fulcrum spacers 26a, 26b connected to the support rings 24a, 24b than shown. When assembled, the fulcrum spacers 26a, 26b provide a pre-load to permit a suitable hydraulic seal such that fluid does not flow through the first valve ring 44a, e.g., during a compression stroke and similarly does not flow through the second valve ring 44b, e.g., during a rebound stroke.

The intake assembly 22 includes the support posts 42 to fix the support rings 24a, 24b relative to each other and to support other components of the intake assembly 22, e.g., limiting movement of the valve rings 44a, 44b and valve discs 48a, 48b transverse to the axis A1. The intake assembly 22 may include two and only two support posts 42, e.g., spaced from each other 180-degrees about the support rings 24a, 24b. The support posts 42 may extend away from one of the support rings 24a, 24b to the other of the support rings 24a, 24b. For example, each support post 42 may extend away from one of the first fulcrum spacers 26a of the first support ring 24a to one of the second fulcrum spacers 26b of the second support ring 24b. The support posts 42 extend along, e.g., are elongated parallel to, the axis A1.

The support posts 42 may be fixed to the support rings 24a, 24b and the fulcrum spacers 26a, 26b. The support post 42 may be press fit into holes 70 of the support rings 24a, 24b and fulcrum spacers 26a, 26b, the support posts 42 may be welded to the support rings 24a, 24b and fulcrum spacers 26a, 26b, the support posts 42 may be fixed to the support rings 24a, 24b and fulcrum spacers via fasteners or other suitable structure. For example, the support posts 42 may include threaded shafts and nuts may be engaged on the threaded shafts to urge one support ring toward the other support ring. As another example, the support posts 42 may be hollow and deformable to secure the support rings 24a, 24b to each other. In other words, the support posts 42 may provide rivets securing the support rings 24a, 24b to each other.

As described, the intake assembly 22 includes the first valve ring 44a and the second valve ring 44b. The first valve ring 44a and second valve ring 44b may have identical construction. The first valve ring 44a and the second valve ring 44b may face each other in a mirrored configuration. The first valve ring 44a may be spaced from the second valve ring 44b, e.g., along the axis A1. The first valve ring 44a and second valve ring 44b may each define respective orifices 46a, 46b. The orifices 46a, 46b may be arcuate in shape. The orifices 46a on the first valve ring 44a may be termed rebound orifices 46a, while the orifices 46b on the second valve ring 44b may be termed compression orifices 46b. The intake orifice 60 defined by the outer tube 36 may be between the first valve ring 44a and the second valve ring 44b along the axis A1, e.g., such that fluid may flow from the intake orifice 60 through the space between the second valve ring 44b and first valve ring 44a to the orifices 46a, 46b. The first valve ring 44a and second valve ring 44b may be supported by the support posts 42, e.g., between the unitary support rings 24a, 24b and fulcrum spacers 26a, 26b along the axis A1. The first valve ring 44a and second valve ring 44b may each include one or more fastening holes 72. The support posts 42 may be disposed within the fastening holes 72. The first valve ring 44a 54 and second valve ring 44b include respective tapered sections 74a, 74b. The tapered sections 74a may be radially outward and provide fluid access to the intake assembly 22 through the outer tube intake orifice 60. The tapered sections 74b may be radially inward, e.g., to apply force on a clamping ring 78 as further discussed below.

The first valve ring 44a and second valve ring 44b have an outer diameter that substantially corresponds to an inner diameter of the outer tube 36 and an inner diameter that substantially corresponds to the outer diameter of inner tube 28. As shown, a pair of O-Rings 76 may be included to seal the first valve ring 44a and the second valve ring 44b to the outer tube 36.

The intake assembly 22 may include the clamping ring 78. The clamping ring 78 may be disposed between the first valve ring 44a and the second valve ring 44b. A radially outmost surface of the clamping ring 78 may be radially inward of the rebound orifices 46a and the compression orifices 46b. The clamping ring 78 may secure the intake assembly 22 to the outer surface 66 of the inner tube 28. For example, normal forces from the tapered sections 74b of the first valve ring 44a and the second valve ring 44b may compress the clamping ring 78 against the inner tube 28. As another example, the clamping ring 78 may be received in a groove 80 that extends circumferentially about the outer surface 66 of the inner tube 28.

The intake assembly 22 includes the valve discs 48a, 48b to control fluid flow through the orifices 46a, 46b of the valve rings 44a, 44b. The valve discs 48a, 48b cover the orifices 46a, 46b, e.g., inhibiting fluid flow in one direction and selectively permitting flow fluid in an opposite direction. At least one valve disc 48a, 48b may abut each of the valve rings 44a, 44b, e.g., about perimeters of the orifices 46a, 46b. To allow clearance, e.g., for the valve discs 48a, 48b to move away from the orifices 46a, 46b, an outer diameter of the valve discs 48a, 48b are less than the inner diameter of the outer tube 36. Likewise, an inner diameter of the valve discs 48a, 48b is greater than the outer diameter of the inner tube 28.

The valve discs 48a, 48b may be supported by the support posts 42. For example, the valve disc may include fastener holes 82 and the support posts 42 may be disposed within the fastener holes 82. The valve discs 48a, 48b may be supported by the support posts 42 between the respective support rings 24a, 24b and valve rings 44a, 44b along the axis A1. For example, first valve discs 48a may be supported between the first support ring 24a and the first valve ring 44a, and second valve discs 48b may be supported between the second support ring 24b and the second valve ring 44b. In the example shown in the Figures, the intake assembly 22 includes two valve discs 48a between the first support ring 24a and the first valve ring 44a and two valve discs 48b between the second support ring 24b and the second valve ring 44b. The intake assembly 22 may include greater or fewer valve discs 48a, 48b.

The damper 16 may include an accumulator 84. The accumulator 84 is in fluid communication with the active rebound valve 50 and active compression valve 54 through an accumulator orifice 86. The accumulator 84 includes a low-pressure chamber 88 84 that is separated from the compression working chamber 34 by an end wall 90. The accumulator 84 80 further includes a flexible membrane 92 and a gas chamber 94. The accumulator 84 can receive or discharge fluid as is known in the art.

With reference to Figure 2, a rebound stroke will be described in greater detail. During the rebound stroke the piston 30 moves in the direction of arrow A. As shown fluid is forced out the distal inner tube orifice 56 into the fluid chamber 38. Fluid flows through fluid chamber 38 and travels into the active rebound valve 50. As shown the fluid is held against the intake assembly 22 by a hydraulic seal of the second valve disc 48b against the second valve ring 44b. The active rebound valve 50 is controlled by the ECU 20 to provide the desired damping effect. The fluid flows from the active rebound valve 50 and through the outer tube intake orifice 60. As the compression working chamber 34 enlarges the pressure therein is less than the pressure at the inlet and the low-pressure chamber 88. This pressure difference acts on the first valve disc 48a to move the bendable disc 48a away from the rebound orifices 46a. The rebound fulcrum spacer 26a may be sized and selected to require a greater or lesser fluid pressure to bend the rebound disc 48a away from the rebound orifice 46a. As shown fluid, as necessary may travel from the low-pressure chamber 88 of the accumulator 84 through the outer tube intake orifice 60. Fluid will then flow through the proximate inner tube orifice 56 and into the compression working chamber 34 until the rebound stroke is complete.

With reference to Figure 3, a compression stroke will be described in greater detail. During the compression stroke the piston 30 move in the direction of arrow B. As shown fluid is forced from the proximate inner tube orifice 56 and into the active compression valve 54, through fluid chamber 38 and outer tube active compression valve orifice 64. The bendable rebound disc 48a is held closed against the rebound orifice 46a by hydrostatic pressure. The fluid flows through the active compression valve 54 as controlled by the ECU 20. As the rebound working chamber 32 enlarges, the pressure therein is less than the pressure at the inlet and the pressure in the compression working chamber 34 is more than the pressure in the low-pressure chamber 88. Here, fluid enters the intake assembly 22 from the outer tube intake orifice 60 and forces the bendable compression disc 48b away from the compression orifices 46b. As shown fluid may flow into the low-pressure chamber of the accumulator 84 as needed. Fluid flows into the fluid chamber 38, through the distal inner tube orifice 56 and into the rebound working chamber 32 until the compression stroke is complete.

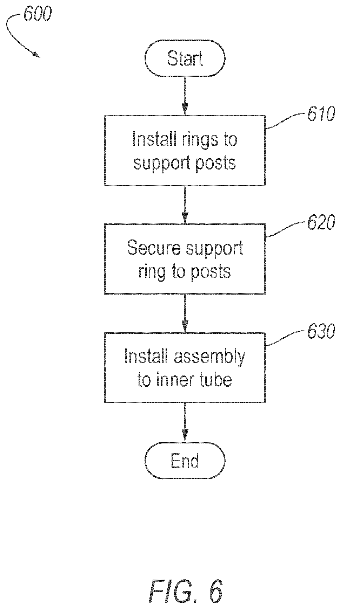

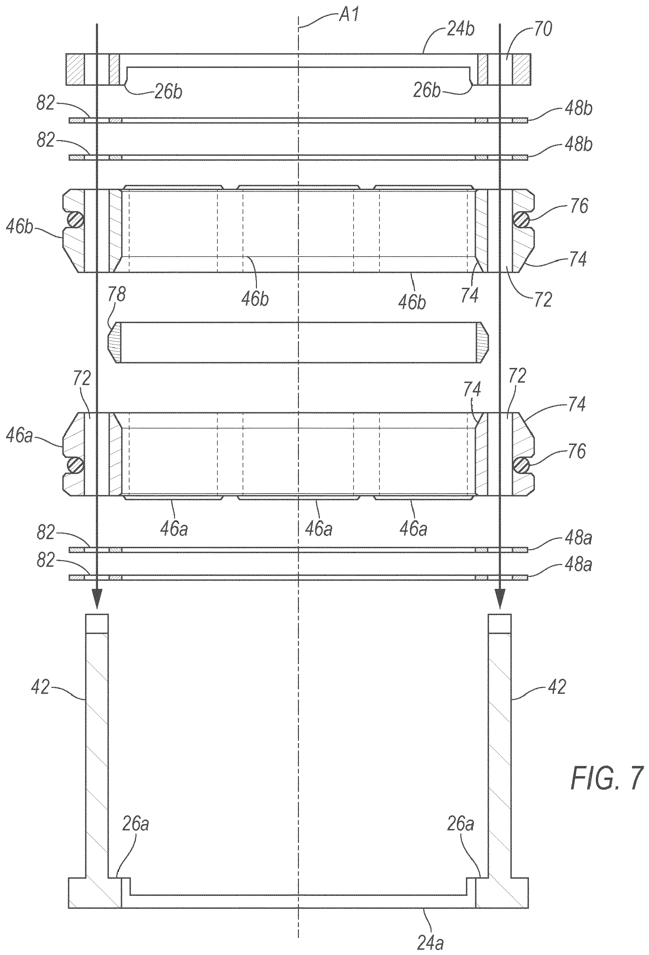

Turning to Figure 6, a flow chart illustrating a method 600 of assembling the damper 16 is shown. The method 600 begins a step 610 where one or more first valve discs 48a, the first valve ring 44a, the clamping ring 78, the second valve ring 44b, and one or more second valve discs 48b are installed onto the pair of support posts 42 attached to the first support ring 24a. For example, and with refence to Figure 7, the support posts 42 may be inserted into the fastener holes 82 of the first valve discs 48a, the fastener holes 72 of the first valve ring 44aa and the second valve ring 44b, and the fastener holes 82 of the second valve discs 48a, 48b. The first valve discs 48a may be between and in abutment with the first valve ring 44a. The second valve discs 48b may abut the second valve ring 44b.

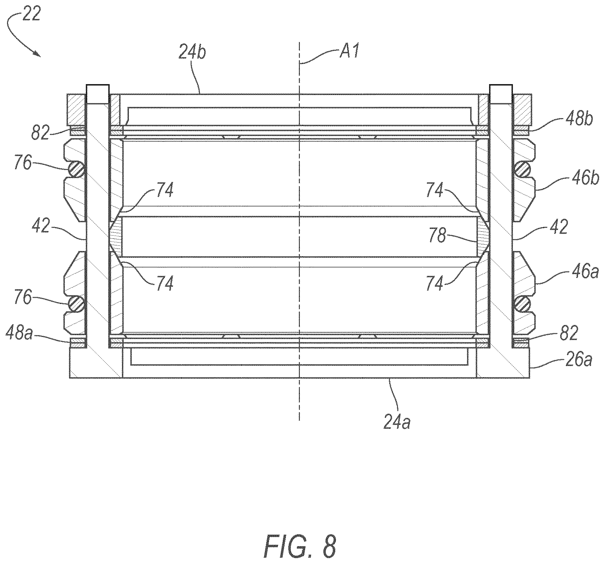

Next, at a step 620, the unitary second support ring 24b and second pair of fulcrum spacers 26b are secured to the support posts 42 opposite the first support ring 24a to provide the intake assembly 22. For example, the unitary second support ring 24b and second pair of fulcrum spacers 26b may be installed onto the support posts 42, as shown in Figure 8. In other words, the support posts 42 may be inserted into the holes 70 of the unitary second support ring 24b and second pair of fulcrum spacers 26b. After insertion, the unitary second support ring 24b and second pair of fulcrum spacers 26b may be fixed to the support posts 42, e.g., via weld, adhesive, friction fit, nuts or other fasteners engaged with the support posts 42, partially or fully riveting the support posts 42, etc.

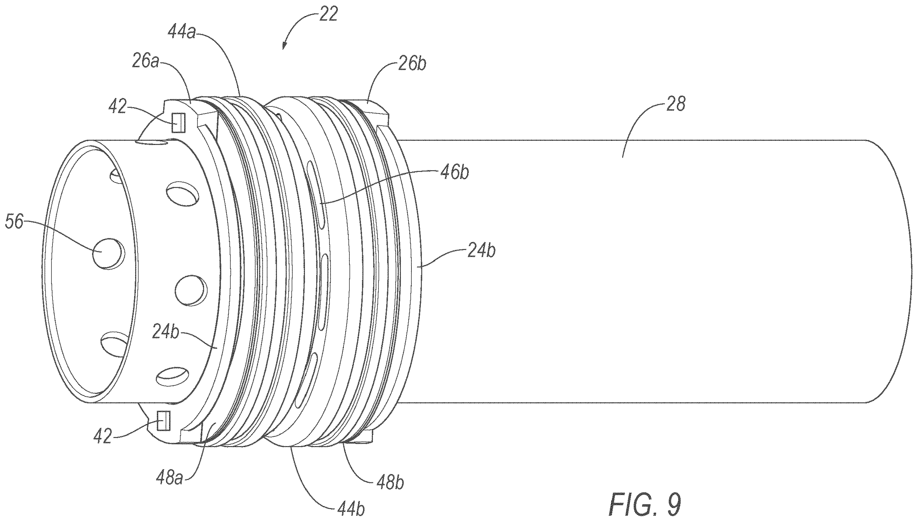

Next, at a step 630 the intake assembly 22 is installed onto the inner tube 28 of the damper 16. The intake assembly 22 may be installed by inserting the inner tube 28 into a central opening (not numbered) of the intake assembly 22, as shown in Figure 9. The intake assembly 22 may be slid along the inner tube 28 to a desired position. For example, the intake assembly 22 may be slid along the inner tube 28 until the clamping ring 78 engages the groove 80 of the inner tube 28. The first valve discs 48a, the first valve ring 44a, the clamping ring 78, the second valve ring 44b, and the second valve discs 48b may be compressed between the unitary first support ring 24a and first pair of fulcrum spacers 26a and the unitary second support ring 24b and second pair of fulcrum spacers 26b. The compression may be provided by further riveting the support posts 42, tightening nuts engaged with the support posts 42, etc. The compression may urge the clamping ring 78 against the outer surface 66 of the inner tube 28. After the intake assembly 22 is installed onto the inner tube 28, assembly the damper 16 may be completed, e.g., with conventional methods.

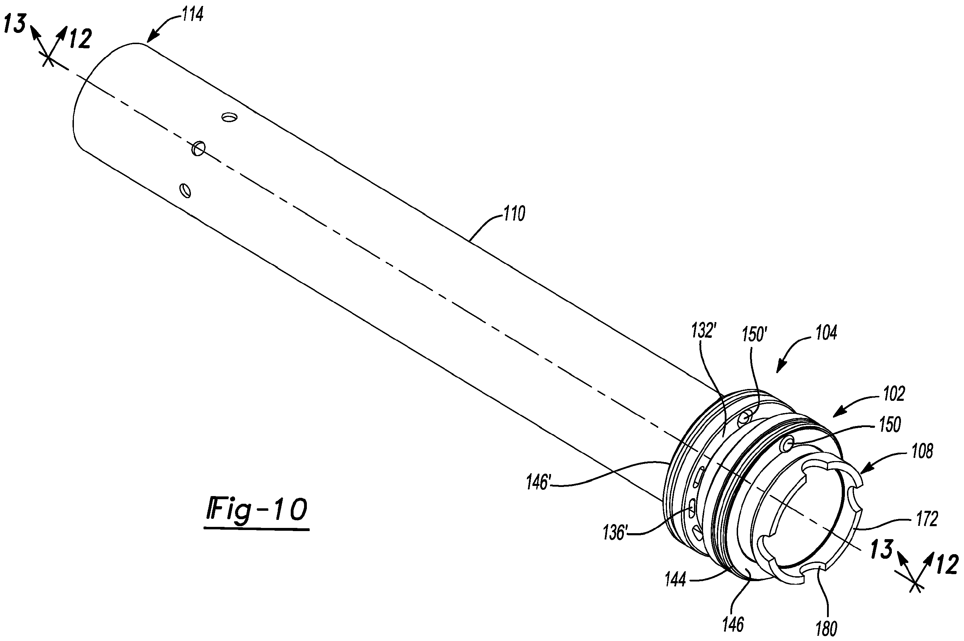

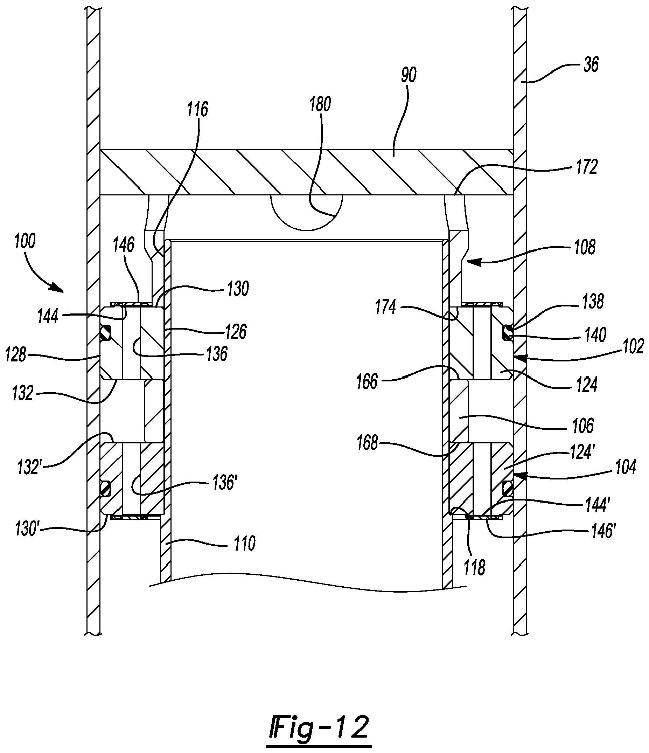

Figures 10-14 depict an intake valve 100 configured to be positioned within fluid chamber 38 for controlling a fluid flow therein. The general function of intake valve 100 is substantially the same as previously described in relation to intake assembly 22. The new features of intake valve 100 will now be described in detail.

Intake valve 100 is a modular configuration including a first valve assembly 102, a second valve assembly 104, a spacer 106, and a retainer 108. Stated another way, intake valve 100 is a collection of components positioned adjacent to one another to function in a similar fashion to intake assembly 22.

Inner tube 110 includes a first end 112 and an opposite second end 114. A reduced outer diameter portion 116 is provided at first end 112 for a predetermined axial length terminating at an annular land 118. A plurality of apertures 120 are circumferentially spaced apart and extend through inner tube 110 to function as previously described distal orifice 52. In general, it should be appreciated that the components of intake valve 100 are configured for ease of manufacturability and assembly. For example, first valve assembly 102 may be identical second valve assembly 104. It should be appreciated, however, first valve assembly 102 may be constructed differently than second valve assembly 104 if different flow characteristics are desired. To minimize assembly complexity at the manufacturing facility of the damper assembly, first valve assembly 102 and second valve assembly 104 may be constructed at a subassembly station disassociated with the remaining assembly steps of damper 16.

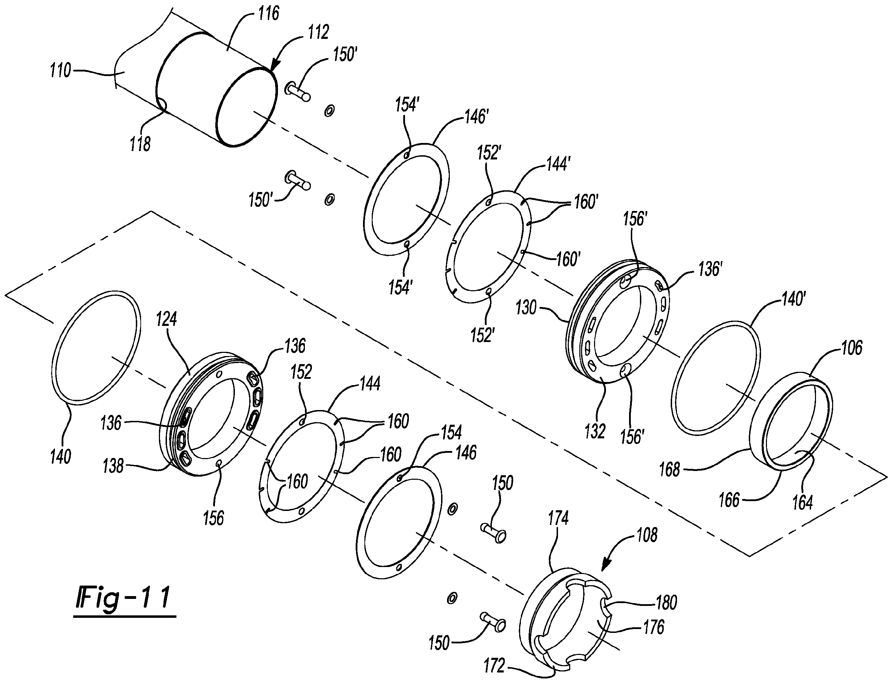

In the embodiment depicted in the figures, first valve assembly 102 is substantially the same as second valve assembly 104. Accordingly, only first valve assembly 102 will be described in detail. As shown in Figures 11-13, first valve assembly 102 includes a first valve ring 124 shaped as a substantially cylindrical hollow cylinder having an inner surface 126, an outer surface 128, a first end surface 130, and an opposite second end surface 132. Inner surface 126 is substantially cylindrically shaped and has an inner diameter slightly larger than an outer diameter of reduced outer diameter portion 116. A plurality of passageways 136 axially extend through first valve ring 124 from first end surface 130 to second end surface 132. Passageways 136 correspond to previously described orifice 46A. First valve ring 124 includes a groove 138 in receipt of a seal 140. Seal 140 may have a circular cross section as depicted in the figures or may be differently shaped to provide a fluid seal against inner surface 68 of outer tube 36 as well as a seal with first valve ring 124.

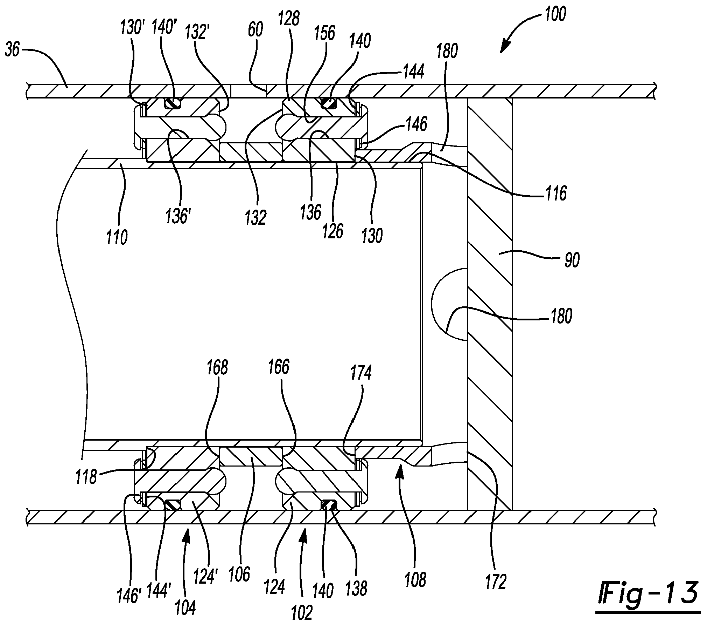

First valve assembly 102 further includes a first bleed disc 144 and a first valve disc 146. First bleed disc 144 is placed in engagement with second end surface 132. First valve disc 146 is stacked on and is positioned adjacent to first bleed disc 144. As best depicted in Figure 13, fasteners 150, such as rivets, extend through apertures 152, 154 extending through first bleed disc 144 and first valve disc 146, respectively. A pair of apertures 156 extend through first valve ring 124. Apertures 152, 154, 156 are aligned and in receipt of fasteners 150. Fasteners 150 may be of any number of configurations including rivets, threaded cooperating members, pressed pins, or the like. Fasteners 150 clamp first valve disc 146 and first bleed disc 144 to first valve ring 124. Relative movement between first bleed disc 144 and first valve disc 146 is limited at zones in close proximity to fasteners 150. On the other hand, first bleed 144 and first valve disc 146 are relatively thin flexible members such that the portions of discs 144, 146 furthest from fasteners 150 may flex to selectively open and close passageways 136. As such, passageways 136 are rotationally offset from each of fasteners 150 to allow first valve disc 146 to flex relative to the first valve ring at the location of flow through first valve ring 124.

The operation of first valve assembly 102 in rebound and compression strokes is substantially the same as previously described. It should be noted, however, that each of the first valve assembly 102 and second valve assembly 104 may include one or more differently shaped discs. For example, first valve assembly 102 includes first bleed disc 144 that includes circumferentially spaced apart slits or grooves 160. Grooves 160 are positioned in axial alignment with passageways 136. If so equipped, a small amount of fluid flow is allowed to pass through grooves 160 when exposed to a substantially less pressure deferential than required to deflect first bleed disc 144 and first valve disc 146 off of first end surface 130. It should also be noted that first valve assembly 102 is not equipped with fulcrum spacers but these features could be incorporated, if desired. In yet another contemplated variation, first valve assembly 102 may be constructed with another valve disc similar to first valve disc 146 in lieu of first bleed disc 144. In a different arrangement, only a single first valve disc 146 is fixed to first valve ring 124 with fasteners 150.

Second valve assembly 104 includes substantially the same components as first valve assembly 102. Accordingly, similar elements will be identified with like reference numerals including a prime suffix. Second valve assembly 104 includes a second valve ring 124', a second bleed disc 144', and a second valve disc 146' interconnected by fasteners 150'.

Spacer 106 is a hollow right circular cylinder having an inner surface 164 defining an inner diameter slightly greater than the diameter of reduced outer diameter portion 116. Spacer 106 includes a first end surface 166 and an opposite second end surface 168. First end surface 166 extends substantially parallel to second end surface 168 at a designated axial spacing from one second end surface 168. The distance between first end surface 166 and second end surface 168 is defined to provide a desired volume of fluid between first valve assembly 102 and second valve assembly 104 to assure proper flow characteristics through each of the valves.

When assembled, first end surface 166 of spacer 106 engages second end surface 132 of first valve ring 124. Second end surface 168 of spacer 106 engages second end surface 132' of second valve ring 124' because the orientation of first valve assembly 102 and second valve assembly 104 are reversed when assembled on inner tube 110. First end surface 130' of second valve ring 124' is positioned in engagement with annular land 118.

Retainer 108 includes a first end surface 172 and an opposite second end surface 174. Retainer 108 includes a cylindrical shaped inner surface 176 having an inner diameter slightly greater than the outer diameter of reduced outer diameter portion 116. Second end surface 174 of retainer 108 is positioned in engagement with first end surface 130 of first valve ring 124. First end surface 172 is placed adjacent to and in engagement with end wall 90 (Figure 2). A plurality of circumferentially spaced apart curved slots 180 are provided to allow fluid communication between compression working chamber 34 and outer tube active compression valve orifice 64 in similar fashion to previously described proximate inner tube orifice 56.

As noted, each of first valve assembly 102, second valve assembly 104, spacer 106 and retainer 108 have an inner diameter sized to provide a slip fit arrangement with reduced outer diameter portion 116. During assembly of intake valve 100, only axial relative movements between the components of intake valve 100 and inner tube 110 are required. Axial motion is simple and provides an opportunity for reduced cost of assembly and possible automation. As an additional benefit, no fasteners, adhesives, or processes such as welding are required.

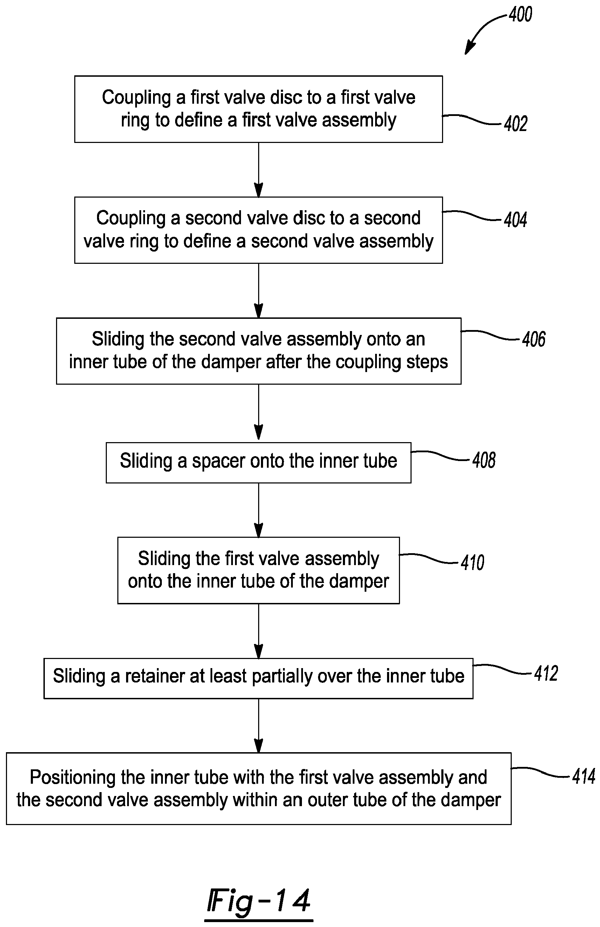

Figure 14 depicts a method of assembling a damper at reference numeral 400. First valve assembly 102 is defined by coupling bleed disc 144 and first valve disc 146 to first valve ring 124 using fasteners 150 at step 402. Second valve assembly 104 is defined by coupling second bleed disc 144' and second valve disc 146' to second valve ring 124' using fasteners 150' at step 404. To further assemble the damper, second valve assembly 104 is slipped over reduced outer diameter portion 116 and placed in engagement with annular land 118 at step 406. The assembly process follows at step 408 by sliding spacer 106 over reduced outer diameter portion 116 and into engagement with second valve assembly. First valve assembly 102 is slid over reduced outer diameter portion 116 and into abutment with spacer 106 at step 410. Retainer 108 is partially positioned over inner tube 110 and partially overhangs it at step 412. These components now form a subassembly that is inserted within outer tube 36 at step 414. First end surface 172 of retainer 108 is placed in engagement with end wall 90 as depicted in Figure 2. Second end 114 of inner tube 110 may be retained by a rod guide, outer tube 36 or some other structure to maintain the desired relative position of components.

Referring to the Figures, wherein like numerals indicate corresponding parts throughout the several views, various comfort valve equipped suspension systems are shown.

Example embodiments will now be described more fully with reference to the accompanying drawings. Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The disclosure has been described in an illustrative manner, and it is to be understood that the terminology which has been used is intended to be in the nature of words of description rather than of limitation. Many modifications and variations of the present disclosure are possible in light of the above teachings, and the disclosure may be practiced otherwise than as specifically described.

Numbered list of embodiments
1. A damper, comprising:
   an inner tube having a longitudinal axis;
   a piston slidably disposed in the inner tube;
   an outer tube surrounding the inner tube, the inner tube and outer tube defining a fluid chamber therebetween;
   a first valve assembly including a first valve ring and a first valve disc fixed to the first valve ring, the first valve ring including a first passageway, the first valve disc covering the first passageway to restrict flow through the first passageway in a first direction and allow flow in an opposite second direction, and
   a second valve assembly including a second valve ring and a second valve disc fixed to the second valve ring, the second valve ring including a second passageway, the second valve disc covering the second passageway to restrict flow through the second passageway in the second direction and allow flow in the first direction, wherein the first valve assembly is axially spaced apart from the second valve assembly.
2. The damper of embodiment 1, further comprising a spacer positioned axially between the first valve assembly and the second valve assembly.
3. The damper of embodiment 1, wherein the outer tube defines an intake orifice positioned axially between the first valve assembly and the second valve assembly.
4. The damper of embodiment 1, wherein the intake orifice is in uninterrupted fluid communication with the first passageway and the second passageway.
5. The damper of embodiment 1, wherein the first valve assembly is identical to the second valve assembly.
6. The damper of embodiment 5, wherein the first valve assembly is oriented in a reverse direction relative to the second valve assembly.
7. The damper of embodiment 1, wherein the first valve assembly includes diametrically opposed fasteners fixing the first valve disc to the first valve ring.
8. The damper of embodiment 7, wherein the first passageway is rotationally offset from each of the fasteners to allow the first valve disc to flex relative to the first valve ring.
9. A damper, comprising:
   an inner tube having a longitudinal axis;
   a piston slidably disposed in the inner tube;
   an outer tube surrounding the inner tube, the inner tube and outer tube defining a fluid chamber therebetween;
   a first valve assembly including a first valve ring and a first valve disc fixed to the first valve ring, the first valve assembly being positioned within the fluid chamber; and
   a second valve assembly including a second valve ring and a second valve disc fixed to the second valve ring, wherein the second valve assembly is positioned within the fluid chamber and axially spaced apart from the second valve assembly,
   wherein the outer tube includes an intake orifice positioned axially between the first valve assembly and the second valve assembly.
10. The damper of embodiment 9, wherein the first valve ring is sealingly engaged with the inner tube and the outer tube.
11. The damper of embodiment 10, wherein the first valve ring includes a first passageway extending therethrough, the first valve disc being movable from a first position restricting flow through the first passageway to a second position allowing flow through the first passageway.
12. The damper of embodiment 9, wherein the first valve assembly is oriented in a reverse direction relative to the second valve assembly.
13. The damper of embodiment 9. wherein the first valve assembly includes a fastener fixing the first valve disc to the first valve ring.
14. The damper of embodiment 9, further comprising a spacer positioned axially between the first valve assembly and the second valve assembly, wherein the spacer includes an outer diameter less than an inner diameter of the outer tube.
15. The damper of embodiment 9, wherein each of the first valve assembly and the second valve assembly are arranged in a slip fit with the inner tube.
16. A method of assembling a damper, comprising:
   coupling a first valve disc to a first valve ring to define a first valve assembly;
   coupling a second valve disc to a second valve ring to define a second valve assembly;
   sliding the second valve assembly onto an inner tube of the damper assembly after the coupling steps;
   sliding the first valve assembly onto the inner tube of the damper assembly after the coupling steps; and
   positioning the inner tube with the first valve assembly and the second valve assembly positioned thereon within an outer tube of the damper assembly.
17. The method of embodiment 16, further comprising installing a spacer onto the inner tube after sliding the second valve assembly and before sliding the first valve assembly.
18. The method of embodiment 16, wherein sliding the second valve assembly onto the inner tube includes sealingly engaging the second valve assembly with the inner tube and the outer tube.
19. The method of embodiment 16, further comprising positioning a third valve disc in engagement with the first valve ring and positioning the first valve disc in engagement with the third valve disc prior to coupling the first valve disc to the first valve ring.
20. The method of embodiment 16, further comprising abutting the second valve assembly against an annular land formed on the inner tube.

## Claims

1. A damper (16), comprising:
an inner tube (28) having a longitudinal axis;
a piston (30) slidably disposed in the inner tube;
an outer tube (36) surrounding the inner tube, the inner tube and outer tube defining a fluid chamber (38) therebetween;
a first valve assembly including a first valve ring (44a) and a first valve disc (48a) fixed to the first valve ring, the first valve ring including a first passageway, the first valve disc covering the first passageway to restrict flow through the first passageway in a first direction and allow flow in an opposite second direction, and
a second valve assembly including a second valve ring (44b) and a second valve disc (48b) fixed to the second valve ring, the second valve ring including a second passageway, the second valve disc covering the second passageway to restrict flow through the second passageway in the second direction and allow flow in the first direction, wherein the first valve assembly is axially spaced apart from the second valve assembly.

2. The damper of claim 1, further comprising a spacer positioned axially between the first valve assembly and the second valve assembly.

3. The damper of claim 1, wherein the outer tube defines an intake orifice (60) positioned axially between the first valve assembly and the second valve assembly.

4. The damper of claim 1, wherein the intake orifice is in uninterrupted fluid communication with the first passageway and the second passageway.

5. The damper of claim 1, wherein the first valve assembly is identical to the second valve assembly.

6. The damper of claim 5, wherein the first valve assembly is oriented in a reverse direction relative to the second valve assembly.

7. The damper of claim 1, wherein the first valve assembly includes diametrically opposed fasteners fixing the first valve disc to the first valve ring.

8. The damper of claim 7, wherein the first passageway is rotationally offset from each of the fasteners to allow the first valve disc to flex relative to the first valve ring.

9. The damper of claim 1, wherein the first valve ring is sealingly engaged with the inner tube and the outer tube.

10. The damper of claim 1, wherein the first valve disc is movable between a first position restricting flow through the first passageway and a second position allowing flow through the first passageway.

11. The damper of claim 1, wherein the spacer includes an outer diameter less than an inner diameter of the outer tube.

12. The damper of claim 1, wherein each of the first valve assembly and the second valve assembly are arranged in a slip fit with the inner tube.

13. A method of assembling the damper of claim 1, comprising:
Coupling (402) the first valve disc to the first valve ring to define the first valve assembly;
coupling (404) the second valve disc to the second valve ring to define the second valve assembly;
sliding (406) the second valve assembly onto the inner tube of the damper assembly after the coupling steps;
sliding (410) the first valve assembly onto the inner tube of the damper assembly after the coupling steps; and
positioning (414) the inner tube with the first valve assembly and the second valve assembly positioned thereon within the outer tube of the damper assembly.

14. The method of claim 13, further comprising installing (408) a spacer onto the inner tube after sliding the second valve assembly and before sliding the first valve assembly.

15. The method of claim 13, wherein sliding the second valve assembly onto the inner tube includes sealingly engaging the second valve assembly with the inner tube and the outer tube.
